# EUROPÄISCHE PATENTANMELDUNG

(11) **EP 4 575 163 A1**
(43) Veröffentlichungstag der Anmeldung: **25.06.2025**
(21) Anmeldenummer: 24215026.6
(22) Anmeldetag: 25.11.2024
(51) Int. Cl.: E06B 3/22, E06B 3/30

(54) **FENSTER- ODER TÜRHOHLKAMMERPROFIL SOWIE DARAUS GEBILDETER FENSTER- ODER TÜRRAHMEN**

(30) Priorität: 22.12.2023 DE 102023136532; 15.03.2024 DE 102024107410
(71) Anmelder: REHAU Industries SE & Co. KG, 95111 Rehau (DE)
(72) Erfinder: Al-Sheyyab, Ahmad, 95111 Rehau (DE); Fink, Norbert, 90542 Eckental (DE); Sell, Stephan, 39126 Magdeburg (DE); Tippenhauer, Horst, 91054 Erlangen (DE)

(57) **Zusammenfassung**

Die vorliegende Erfindung betrifft ein Fenster- oder Türprofilhohlkammerprofil (1), das (a) ein Kernprofil (30) mit einer aus einem Polyamidmaterial gebildeten Kunststoffmatrix und in der Kunststoffmatrix enthaltenen Verstärkungsfasern; und (b) ein das Kernprofil (30) zumindest teilweise ummantelndes Mantelprofil (40) aus einem mit dem Kunststoffmaterial des Kernprofils (30) kompatiblen thermoplastischen Kunststoffmaterial umfasst, wobei sich das Fenster- oder Türprofilhohlkammerprofil (1) erfindungsgemäß dadurch auszeichnet, dass das zum Kunststoffmaterial des Kernprofils (30) kompatible thermoplastische Kunststoffmaterial des Mantelprofils (40) einen Blend aus einem Polyamidmaterial und einem Acrylnitril-Styrol-Acrylester-Terpolymer (ASA) ist. Darüber hinaus bezieht sich die vorliegende Erfindung auf einen Fenster- oder Türrahmen, der aus Abschnitten eines erfindungsgemäßen Fenster- oder Türprofilhohlkammerprofis (1) gebildet ist.

## Beschreibung

Die Erfindung betrifft ein Fenster- oder Türprofilhohlkammerprofil, das (a) ein Kernprofil mit einer aus thermoplastischem Polyamidmaterial gebildeten Kunststoffmatrix und in der Kunststoffmatrix enthaltenen Verstärkungsfasern; und (b) ein das Kernprofil zumindest teilweise ummantelndes Mantelprofil aus einem mit dem Kunststoffmaterial des Kernprofils kompatiblen thermoplastischen Kunststoffmaterial umfasst. Darüber hinaus betrifft die vorliegende Erfindung einen Fenster- oder Türrahmen, der aus Abschnitten eines derartigen Fenster- oder Türprofilhohlkammerprofis gebildet ist.

Für Fenster- und Türhohlkammerprofilen zur Einfassung von Glasscheiben wird ein eine möglichst gute Wärmedämmung des daraus erhaltenen Fensters bzw. der daraus erhaltenen Tür angestrebt. Um die für solche Fenster oder Türen erforderliche mechanische Stabilität zu gewährleisten, ist es für entsprechende Fenster- oder Türhohlkammerprofile aus unverstärktem, thermoplastischem Material, beispielsweise Polyvinylchlorid (PVC), aus statischen Gründen erforderlich, ein meist metallisches Armierungsprofil in mindestens eine der Hohlkammern des Fenster- oder Türhohlkammerprofils einzubringen, was die mechanische Stabilität auf Kosten der deutlich verschlechterten Wärmedämmeigenschaften verbessert. Zur Erhöhung der Stabilität bei guten Wärmedämmeigenschaften wird beispielsweise in der DE 203 02 286 U1 die kontinuierliche Faserverstärkung eines Bereichs oder mehrerer Bereiche eines Fensterprofils aus thermoplastischem Material, beispielsweise aus Polyamid, mit einem Faservolumengehalt von mehr als 20% vorgeschlagen. Fenster- und Türprofile sind aber unterschiedlichen Witterungsverhältnissen ausgesetzt. Die mangelnde Witterungsbeständigkeit der in DE 203 02 286 U1 Fensterprofile aus faserverstärktem Polyamid wird als nachteilig angesehen.

An dieser Stelle setzt die vorliegende Erfindung ein, der die Aufgabe zugrunde liegt, ein Fenster- oder Türprofilhohlkammerprofil zur Verfügung zu stellen, das die Nachteile des Stands der Technik zumindest teilweise überwindet. Insbesondere soll das erfindungsgemäße Fenster- oder Türprofilhohlkammerprofil über eine hohe mechanische Stabilität bei gleichzeitig guter Witterungsbeständigkeit verfügen. Darüber hinaus liegt auch in der Bereitstellung eines Fenster- oder Türrahmens, der aus Abschnitten eines derartigen Fenster- oder Türprofilhohlkammerprofis gebildet ist.

Diese und andere Aufgaben werden erfindungsgemäß durch ein Fenster- oder Türprofilhohlkammerprofil mit den Merkmalen des Anspruchs 1 bzw. durch einen Fenster- oder Türrahmen mit den Merkmalen des Anspruchs 9 gelöst. Bevorzugte Ausführungsformen des erfindungsgemäßen Fenster- oder Türprofilhohlkammerprofils sowie des erfindungsgemä-ßen Fenster- oder Türrahmens sind in den abhängigen Ansprüchen beschrieben.

Gemäß der vorliegenden Erfindung wurde überaschenderweise erkannt, dass die Witterungsbeständigkeit eines Polyamid-umfassenden Fenster- oder Türprofilhohlkammerprofils, dadurch verbessern kann, dass zumindest die in einer Einbausituation der Gebäudeaußenseite zugewandte Oberfläche des Fenster- oder Türprofilhohlkammerprofils mit einer witterungsfesten Schicht einem Blend aus einem Polyamidmaterial und einem Acrylnitril-Styrol-Acrylester-Terpolymer (ASA) versehen ist. Eine solche Schicht ist zum Polyamid des Kernprofils kompatibel und kann somit einfach im Zuge einer Coexstrusion auf die Außenoberfläche des Kernprofils aufgebracht werden.

Dementsprechend liegt der vorliegenden Erfindung in der Bereitstellung eines Fenster- oder Türprofilhohlkammerprofils, das (a) ein Kernprofil mit einer aus einem Polyamidmaterial gebildeten Kunststoffmatrix und in der Kunststoffmatrix enthaltenen Verstärkungsfasern; und (b) ein das Kernprofil zumindest teilweise ummantelndes Mantelprofil aus einem mit dem Kunststoffmaterial des Kernprofils kompatiblen thermoplastischen Kunststoffmaterial ein umfasst, wobei sich das Fenster- oder Türprofilhohlkammerprofil erfindungsgemäß dadurch auszeichnet, dass das zum Kunststoffmaterial des Kernprofils kompatible thermoplastische Kunststoffmaterial des Mantelprofils einen Blend aus einem Polyamidmaterial und einem Acrylnitril-Styrol-Acrylester-Terpolymer (ASA) ist. Darüber hinaus stellt die vorliegende Erfindung einen Fenster- oder Türrahmen zur Verfügung, der aus Abschnitten eines erfindungsgemäßen Fenster- oder Türprofilhohlkammerprofis gebildet ist, vorzugsweise durch Verschweißen von zumindest teilweise auf Gehrung geschnittenen Abschnitten eines erfindungsgemäßen Fenster- oder Türprofilhohlkammerprofis erhalten worden ist.

Wie hierin verwendet bedeutet der Begriff "Polyamidmaterial" ein Polyamid, dem die zur (Co-)Extrusion von Fenster- oder Türprofilhohlkammerprofilen üblichen Zusatzstoffe, wie beispielsweise Stabilisatoren, Weichmacher, Pigmente und dergleichen, zugesetzt worden sind. Darüber hinaus beschreibt der Begriff "wetterseitige Außenwand" wie hierin verwendet diejenige Wand des erfindungsgemäßen Fenster- oder Türprofilhohlkammerprofils, die beim bestimmungsgemäßen Einsatz des erfindungsgemäßen Fenster- oder Türprofilhohlkammerprofils zur Außenseite des Gebäudes weist. Dementsprechend beschreibt der Begriff "raumseitige Außenwand" (die der Wetterseite gegenüberliegende Seite) wie hierin verwendet diejenige Wand des erfindungsgemäßen Fenster- oder Türprofilhohlkammerprofils, die beim bestimmungsgemäßen Einsatz des erfindungsgemäßen Fenster- oder Türprofilhohlkammerprofils zur Raumseite des Fensters bzw. der Tür weist, die das erfindungsgemäße Fenster- oder Türprofilhohlkammerprofil umfasst.

Hinsichtlich des erfindungsgemäßen Fenster- oder Türprofilhohlkammerprofils kann es bevorzugt sein, wenn das Kunststoffmaterial des Mantelprofils das Acrylnitril-Styrol-Acrylester-Terpolymer (ASA) in einem Anteil von 10 Gew.-% bis 65 Gew.-%, bezogen auf das Gewicht des Mantelprofils als 100 Gew.-%, enthält. Mit einem Anteil des Acrylnitril-Styrol-Acrylester-Terpolymers innerhalb eines solchen Bereichs wird eine ausgewogene Balance aus guter Witterungsbeständigkeit und Kompatibilität mit dem Kernprofil erzielt. Unter diesem Gesichtspunkt hat sich ein des Acrylnitril-Styrol-Acrylester-Terpolymers am Kunststoffmaterial des Mantelprofils in einem Bereich von 20 Gew.-% bis 55 Gew.-%, insbesondere in einem Bereich von 30 Gew.-% bis 45 Gew.-%, jeweils bezogen auf das Gewicht des Mantelprofils als 100 Gew.-%, als besonders vorteilhaft erwiesen.

Es kann auch von Vorteil sein, wenn die Dicke der Mantelprofils innerhalb eines Bereichs von 0,3 mm bis 1,5 mm liegt, insbesondere im Bereich von etwa 0,4 mm bis etwa 1,2 mm, vorzugsweise etwa 0,5 mm bis etwa 0,9 mm und besonders bevorzugt von etwa 0,6 mm beträgt. Eine Dicke der Außenschicht in diesem Bereich überdeckt eventuell an der Oberfläche auftretende Glasfasern in ausreichend.

Es kann auch bevorzugt sein, wenn die wetterseitige Außenwand und/oder die raumseitige Außenwand zumindest teilweise durch das Mantelprofil gebildet werden. Dadurch sind die Ansichtsflächen der aus dem erfindungsgemäßen Fenster- oder Türprofilhohlkammerprofil gebildeten Bauelemente, also entsprechende Fenster oder Türe, aus dem Mantelprofil ausgebildet. Dadurch sind die in einer Einbausituation wechselnden Wärme- und Feuchtigkeitsbedingungen ausgesetzten Oberflächen des erfindungsgemäßen Fenster- oder Türhohlkammerprofils mit der die Witterungsbeständigkeit verbessernden Mantelschicht versehen. Darüber hinaus wird das unter Umständen oberflächlich raue Kernprofil an den Sichtflächen nach außen hin durch das Mantelprofil verdeckt. Dabei ist es besonders bevorzugt, wenn die wetterseitige Oberfläche der wetterseitigen Außenwand und/oder die raumseitige Oberfläche der raumseitigen Außenwand von einer vorzugsweise 0,3 mm bis 1,5 mm dicken Schicht des Mantelprofils gebildet sind. Die übrige Wandstärke der wetterseitigen Außenwand und/oder die raumseitige Außenwand kann durch das Kernprofil ausgebildet sein. Dadurch bleiben glatte Ansichtsflächen der aus dem erfindungsgemäßen Fenster- oder Türprofilhohlkammerprofil gebildeten Bauelemente bei sehr hoher mechanischer Stabilität des gebildeten Rahmens erhalten. Bevorzugt weist die durch das Mantelprofil gebildete Deckschicht eine Dicke im Bereich von etwa 0,4 mm bis etwa 1,2 mm, insbesondere etwa 0,5 mm bis etwa 0,9 mm, besonders bevorzugt von etwa 0,6 mm, auf.

Es kann auch nützlich sein, wenn das Polyamid des Kernprofils ausgewählt ist aus der Gruppe, umfassend Polyamid-6 (PA 6), Polyamid-6.6 (PA 6.6), Polyamid-6.10 (PA 6.10), Polyamid-4.6 (PA 4.6), Polyamid-12 (PA 12) sowie Blends der vorgenannten Polyamide. Dabei ist Polyamid-6 aufgrund seiner guten Verfügbarkeit besonders bevorzugt. Vorzugsweise wird das Polyamid des Kernprofils auch als das thermoplastische Kunststoffmaterial des Mantelprofils eingesetzt. In besonders bevorzugten Ausführungsformen des erfindungsgemäßen Fenster- oder Türprofilhohlkammerprofils wird Polyamid 6 als Polyamid des Kernprofils und ein Blend von Polyamid-6 und einem Acrylnitril-Acrylester-Styrol-Copolymer als thermoplastisches Kunststoffmaterial des Mantelprofils verwendet.

Zweckmäßigerweise sind die Verstärkungsfasern als Glas- und/oder Carbon- und/oder Aramidfasern und/oder Basaltfasern ausgebildet, wobei andere Fasermaterialien jedoch nicht ausgeschlossen sind. Erfindungsgemäß ist aber der Einsatz von Glasfasern als in der Kunststoffmatrix des Kernprofils enthaltene Verstärkungsfasern bevorzugt. Im Rahmen der Erfindung ist es dabei bevorzugt, Kurzglasfasern mit einer Faserlänge im Bereich von 0,1 mm bis 5 mm, Langglasfasern mit einer Faserlänge im Bereich von 5 mm bis 50 mm und/oder Endlosglasfasern mit einer Länge von über 50 mm einzeln oder in Kombination zu verwenden. Während bei der Verwendung von Kurz- und Langglasfasern das Kernprofil bevorzugt durch Extrusion bzw. Coextrusion hergestellt wird, ist bei der Verwendung von Endlosglasfasern die Herstellung des erfindungsgemäßen Fenster- oder Türprofilhohlkammerprofils mittels reaktiver Pultrusion am besten geeignet. Bei der Verwendung von Kurzglasfasern kann es auch günstig sein, wenn die mittlere Faserlänge der Verstärkungsfasern im Bereich von 1,5 mm bis 3,2 mm liegt. Eine mittlere Länge der Glasfasern in diesem Bereich führt zu einer hohen mechanischen Stabilität eines erfindungsgemäßen Fenster- oder Türprofilhohlkammerprofils sowohl in Längsrichtung als auch senkrecht dazu. In diesem Zusammenhang hat sich eine mittlere Faserlänge in einem Bereich von 2,5 mm bis 3,0 als besonders geeignet erwiesen. Erfindungsgemäß ist auch die Verwendung von Endlosglasfasern besonders bevorzugt. Für Endlosglasfasern besteht der größte Bedarf die Oberflächengüte zu verbessern. Darüber hinaus werden unter Verwendung von Endlosglasfasern die höchsten Steifigkeits- und Festigkeitswerte mit einem E-Modul gemäß DIN EN ISO 527-4: 2022-03 von bis zu 70.000 N/mm² in Profillängsrichtung erzielt.

Es kann auch hilfreich sein, wenn die Verstärkungsfasern in einem Anteil von 10 Gew.-% bis 90 Gew.-%, bezogen auf das Gewicht des Kernprofils als 100 Gew-%, in dem Kernprofil enthalten sind. Wenn der Gewichtsanteilanteil der Verstärkungsfasern in dem Kernprofil innerhalt des Bereichs von 10 Gew.-% bis 90 Gew.-%, bezogen auf das Gewicht des Kernprofils als 100 Gew-%, liegt, werden ausgezeichnete E-Module gemäß DIN EN ISO 527-4: 2022-03 und entsprechende Kernprofile lassen sich beispielsweise mittels reaktiver Pultrusion erzeugen. erzielt. In diesem Zusammenhang ist bevorzugt, wenn der Gewichtsanteilanteil der Verstärkungsfasern in dem Kernprofil innerhalt des Bereichs von 20 Gew.-% bis 80 Gew.-%, insbesondere 30 Gew.-% bis 60 Gew.-%, jeweils bezogen auf das Gewicht des Kernprofils als 100 Gew-%, liegt.

Vorzugsweise wird die Außenschicht mit dem Kernprofil coextrudiert. Der Begriff "Coextrusion", wie hierin verwendet, meint in diesem Zusammenhang auch den Auftrag der Beschichtung auf das frisch hergestellte Kernprofil mittels einer unmittelbar an die reaktive Pultrusion oder die Extrusion des Kernprofils online anschließenden Extrusion, wobei in diesem Fall auch die Zwischenkühlung des Kernprofils vor dem Auftrag des Mantelprofils im Rahmen der Erfindung liegt. Alternativ hierzu können bei der Coextrusion das Kernprofil und die Beschichtung in einem gemeinsamen Werkzeug hergestellt werden.

Alle Kunststoffmaterialien in dem erfindungsgemäßen Fenster- oder Türprofilhohlkammerprofil können dabei auch in Form von durch einen Recycling-Prozess gewonnenen Materialien eingesetzt werden. Insbesondere ist es bevorzugt, dass ein recycliertes Polyamid in dem Kernprofil enthalten ist. Zusätzlich oder alternativ dazu kann in dem Mantelprofil auch "frisches", also nicht recycliertes Polymermaterial eingesetzt werden.

Besonders bevorzugt lässt sich das Kernprofil des erfindungsgemäßen Fenster- oder Türprofilhohlkammerprofils in an sich bekannter Weise durch Coextrusion des Kernprofils und des Mantelprofils herstellen.

Bevorzugt werden die erfindungsgemäßen Fenster- oder Türprofilhohlkammerprofile zur Herstellung eines Kunststoff-Fensters oder einer Kunststoff-Tür verwendet. Durch Verschweißen von auf Gehrung geschnittenen Stücken eines erfindungsgemäßen Fenster- oder Türprofilhohlkammerprofils oder Verbinden solcher Stücke mittels entsprechender Eckverbinder kann ein Fenster- oder Türrahmen erhalten werden. Der Fenster- oder Türrahmen ist für den Einbau in eine Öffnung einer Wandung eines Gebäudes vorgesehen bzw. in die Öffnung der Wandung eines Gebäudes einbaubar.

Die Ausführungen in Bezug auf das erfindungsgemäße Fenster- oder Türprofilhohlkammerprofil gelten in Bezug auf das erfindungsgemäße Verfahren entsprechend.

In Bezug auf das erfindungsgemäße Verfahren ist bevorzugt, wenn die Herstellung des Kernprofils, ggf. zusammen mit dem Mantelprofil, mittels Extrusion, Coextrusion oder Pultrusion, insbesondere mittels reaktiver Pultrusion, erfolgt.

Alle Kunststoffmaterialien in dem erfindungsgemäßen Fenster- oder Türprofilhohlkammerprofil können dabei auch in Form von durch einen Recycling-Prozess gewonnenen Materialien eingesetzt werden. Insbesondere ist es bevorzugt, dass ein recycliertes Polyamid in dem Kernprofil enthalten ist. Zusätzlich oder alternativ dazu kann in dem Mantelprofil auch "frisches", also nicht recycliertes Polymermaterial eingesetzt werden.

Besonders bevorzugt lässt sich das erfindungsgemäße Fenster- oder Türprofilhohlkammerprofil in an sich bekannter Weise durch Coextrusion des Kernprofils und des Mantelprofils herstellen.

Bevorzugt werden die erfindungsgemäßen Fenster- oder Türprofilhohlkammerprofile zur Herstellung eines Kunststoff-Fensters oder einer Kunststoff-Tür verwendet. Durch Verschweißen von auf Gehrung geschnittenen Stücken eines erfindungsgemäßen Fenster- oder Türprofilhohlkammerprofils kann ein erfindungsgemäßer Fenster- oder Türrahmen erhalten werden. Der erfindungsgemäße Fenster- oder Türrahmen ist für den Einbau in eine Öffnung einer Wandung eines Gebäudes vorgesehen bzw. in die Öffnung der Wandung eines Gebäudes einbaubar.

Die Ausführungen in Bezug auf das erfindungsgemäße Fenster- oder Türprofilhohlkammerprofil gelten in Bezug auf den erfindungsgemäßen Fenster- oder Türrahmen entsprechend.

Das erfindungsgemäße Fenster- oder Türprofilhohlkammerprofil sowie einzelne Teile davon können auch zeilenweise oder schichtweise unter Verwendung eines zeilenaufbauenden oder schichtaufbauenden Fertigungsverfahrens (z. B. 3D-Druck) hergestellt werden, bevorzugt ist jedoch die Herstellung mittels Coextrusion.

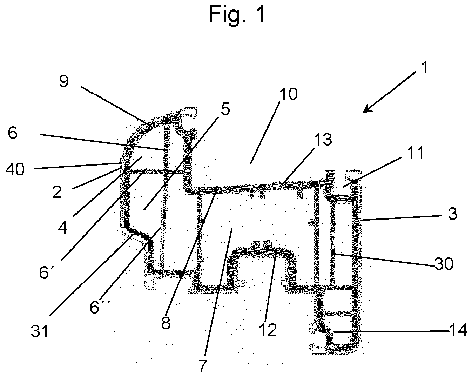

Im Folgenden soll die vorliegende Erfindung unter Bezugnahme auf die in den Figuren dargestellten Ausführungsformen im Detail erläutert werden. Dabei zeigt Figur 1 eine Querschnittsdarstellung eines als Fensterflügelprofil ausgebildeten Fenster- oder Türprofilhohlkammerprofils gemäß einer Ausführungsform der vorliegenden Erfindung.

In Figur 1 ist eine Ausführungsform des erfindungsgemäßen Fenster- oder Türprofilhohlkammerprofils 1 am Beispiel eines Flügelprofils für ein Kunststofffenster in einer Querschnittsdarstellung gezeigt. Das erfindungsgemäße Fenster- oder Türprofilhohlkammerprofil 1 umfasst eine wetterseitige Außenwand 2 und eine raumseitigen Außenwand 3. An die wetterseitige Außenwand 2 grenzen zwei Hohlkammern 4, 5 an, die von als Stegen ausgebildeten Wandungen 6, 6',6" und der wetterseitigen Außenwand 2 begrenzt sind. Zentral umfasst das erfindungsgemäße Hohlkammerprofils 1 eine Haupthohlkammer 7. Der obere Steg 8 der Haupthohlkammer 7 bildet zusammen mit einem Außenüberschlag 5 einen Falzbereich 10, in den ein nicht dargestelltes Flächenelement, insbesondere eine Isolierverglasung, aufgenommen werden kann. Das Flächenelement wird durch eine Glasleiste (nicht dargestellt) stabilisiert, die in einer Glasleistennut 11 des erfindungsgemäßen Hohlkammerprofils 1 verankerbar ist. Die in Fig. 1 unten angeordnete Außenwand 12 des erfindungsgemäßen Hohlkammerprofils 1 wird als beschlagseitige Profilaußenwand 12 bezeichnet, während man bei der der Beschlagseite gegenüberliegenden Seite von der Falzseite mit einer falzseitigen Profilaußenwand 13 spricht.

In der in Fig. 1 dargestellten Ausführungsform des erfindungsgemäßen Fenster- oder Türprofilhohlkammerprofils 1 wird der zentrale Bereich, der beispielsweise die Wandungen 6, 6',6", die inneren Teile der wetterseitigen Außenwand 2, der raumseitigen Außenwand 3, und der der beschlagseitigen Profilaußenwand 12, Abschnitte der Glasleistennut 11, die falzseitige Profilaußenwand 13 und Teile des Anschlags 14 umfasst, von einem Kernprofil 30 gebildet. Die zur Profilaußenseite gerichteten Anteile der wetterseitigen Außenwand 2, der raumseitigen Außenwand 3 und der beschlagseitigen Profilaußenwand 12 sowie Bereiche eines Anschlags 14 werden von einem Mantelprofil 40 gebildet. Damit wird das Kernprofil 30 teilweise von einer etwa 0,7 mm starken Deckschicht des Mantelprofils 40 umhüllt. Dabei bildet das Mantelprofil 40 großenteils die Außenseite des die erfindungsgemäßen Fenster- oder Türprofilhohlkammerprofils 1, während das Kernprofil lediglich im Bereich der falzseitigen Profilaußenwand 13 und daran angrenzend nach außen hin freiliegt.

Gemäß der in Fig. 1 dargestellten Ausführungsform des erfindungsgemäßen Fenster- oder Türprofilhohlkammerprofils 1 umfasst das Kernprofil 30 eine Kunststoffmatrix aus Polyamid 6, dem zur Extrusion von Fenster- oder Türprofilhohlkammerprofilen übliche Zusatzstoffe, wie beispielsweise Stabilisatoren, Weichmacher, Pigmente und dergleichen, zugesetzt sind. In die Kunststoffmatrix sind zur Verstärkung Kurzglasfasern mit einer mittleren Faserlänge von 2,6 mm in einem Anteil von 48 Gew.-%, bezogen auf das Gewicht des Kernprofils 30 als 100 Gew.-%, eingebettet. Das Mantelprofil 40 bildet ein Blend aus Polyamid 6 mit Acrylnitril-Acrylester-Styrol-Terpolymer (ASA), wobei dem Blend die zur Extrusion von Fenster- oder Türprofilhohlkammerprofilen übliche Zusatzstoffe ebenfalls zugesetzt wurden.

Der Anteil an Acrylnitril-Acrylester-Styrol-Terpolymer in dem Blend wurde über einen Bereich von 10 Gew.-% bis 65 Gew.-%, bezogen auf das Gesamtgewicht der Mantelschicht 40, variiert. Diese Blends sind zum Kernprofil 30 kompatibel. Die so erhaltenen erfindungsgemäßen Fenster- oder Türprofilhohlkammerprofile 1 und das Kernprofil 30 (ohne Mantelschicht 40) als Referenzbeispiel wurden einem Bewitterungstest gemäß DIN EN ISO 4892-2:2021-11 (Methode B) unterzogen.

Dabei zeigten die erfindungsgemäßen Profile 1 ein gegenüber dem Referenzbeispiel (Kernprofil 30 ohne Mantelschicht 40) stark verbessertes Bewitterungsverhalten.

Das Fenster- oder Türprofilhohlkammerprofils 1 gemäß der in Fig. dargestellten Ausführungsform der vorliegenden Erfindung besitzt eine sehr gute Witterungsbeständigkeit und verfügt eine hohe mechanische Stabilität sowohl in Längsrichtung (E-Modul gemäß DIN EN ISO 527-4: 2022-03 von 9.200 N/mm²) als auch senkrecht dazu.

Das erfindungsgemäße Fenster- oder Türprofilhohlkammerprofil 1 wurde durch Coextrudieren des Kernprofils 30 und des Mantelprofils 40 hergestellt. Dabei wurde durch einen Recycling-Prozess gewonnenes Polyamid 6 für das Kernprofil 30 eingesetzt, während für das Mantelprofil 40 nicht recycliertes Polymermaterial eingesetzt wurde.

Trotz des hohen Kurzglasfaseranteils im Kernprofil 30 lässt sich das erfindungsgemäße Fenster- oder Türprofilhohlkammerprofil 1 nach dem Fachmann bekannten Methoden unter Bildung eines erfindungsgemäßen Fenster- oder Türrahmens verschweißen, ohne dass dafür über Standardmethoden für das Verschweißen von Kunststoffprofilen hinausgehende zusätzliche Maßnahmen ergriffen werden müssen. Dazu werden aus dem erfindungsgemä-βen Fenster- oder Türprofilhohlkammerprofil 1 entsprechende Abschnitte abgelängt, auf Gehrung geschnitten und unter Verwendung eines Schweißtisches unter Bildung eines erfindungsgemäßen Fensterrahmens miteinander verschweißt. Die erhaltene erfindungsgemäße Eckverbindung verfügt über eine hohe Eckfestigkeit.

Die vorliegende Erfindung wurde exemplarisch unter Bezugnahme auf Hohlkammerprofile für den Flügelrahmen eines Fensters beschrieben. Es versteht sich, dass die vorliegende Erfindung auch auf andere Fenster- oder Türprofilhohlkammerprofile, insbesondere Blendrahmenprofile für ein Fenster sowie für Blendrahmen-, Zargen- oder Flügelrahmenprofile einer Tür entsprechend anwendbar ist.

## Patentansprüche

1. Fenster- oder Türprofilhohlkammerprofil (1), umfassend
(a) ein Kernprofil (30) mit einer aus einem Polyamidmaterial gebildeten Kunststoffmatrix und in der Kunststoffmatrix enthaltenen Verstärkungsfasern; und
(b) ein das Kernprofil (30) zumindest teilweise ummantelndes Mantelprofil (40) aus einem mit dem Kunststoffmaterial des Kernprofils (30) kompatiblen thermoplastischen Kunststoffmaterial,
**dadurch gekennzeichnet, dass**
das zum Kunststoffmaterial des Kernprofils (30) kompatible thermoplastische Kunststoffmaterial des Mantelprofils (40) einen Blend aus einem Polyamidmaterial und einem Acrylnitril-Styrol-Acrylester-Terpolymer (ASA) ist.

2. Fenster- oder Türprofilhohlkammerprofil (1) nach Anspruch 1, **dadurch gekennzeichnet, dass** das Kunststoffmaterial des Mantelprofils (40) das Acrylnitril-Styrol-Acrylester-Terpolymer (ASA) in einem Anteil von 10 Gew.-% bis 65 Gew.-%, bezogen auf das Gewicht des Mantelprofils als 100 Gew.-%, enthält.

3. Fenster- oder Türprofilhohlkammerprofil (1) nach Anspruch 1 oder Anspruch 2, **dadurch gekennzeichnet, dass** die Dicke der Mantelprofils (40) innerhalb eines Bereichs von 0,3 mm bis 1,5 mm liegt.

4. Fenster- oder Türprofilhohlkammerprofil (1) nach einem der Ansprüche 1 bis 3, **dadurch gekennzeichnet, dass** eine wetterseitige Außenwand (2) und/oder eine raumseitige Außenwand (30) zumindest teilweise durch das Mantelprofil (40) gebildet werden.

5. Fenster- oder Türprofilhohlkammerprofil (1) nach Anspruch 4, **dadurch gekennzeichnet, dass** die wetterseitige Oberfläche der wetterseitigen Außenwand (2) und/oder die raumseitige Oberfläche der raumseitigen Außenwand (2) von einer Schicht des Mantelprofils (40) gebildet werden.

6. Fenster- oder Türprofilhohlkammerprofil (1) nach Anspruch 5, **dadurch gekennzeichnet, dass** das Polyamid des Kernprofils (30) ausgewählt ist aus der Gruppe, umfassend Polyamid-6 (PA 6), Polyamid-6.6 (PA 6.6), Polyamid-6.10 (PA 6.10), Polyamid-4.6 (PA 4.6), Polyamid-12 (PA 12) sowie Blends der vorgenannten Polyamide.

7. Fenster- oder Türprofilhohlkammerprofil (1) nach einem der Ansprüche 1 bis 6, **dadurch gekennzeichnet, dass** es mittels Extrusion, Coextrusion oder Pultrusion, insbesondere mittels reaktiver Pultrusion hergestellt ist.

8. Fenster- oder Türprofilhohlkammerprofil (1) nach einem der Ansprüche 1 bis 7, **dadurch gekennzeichnet, dass** die Verstärkungsfasern als Glas- und/oder Carbon- und/oder Aramidfasern und/oder Basaltfasern ausgebildet sind.

9. Fenster- oder Türrahmen, der aus Abschnitten eines Fenster- oder Türprofilhohlkammerprofis (1) nach einem der Ansprüche 1 bis 8 gebildet ist.
